(19) Europäisches Patentamt / European Patent Office / Office européen des brevets

(11) **EP 4 185 933 B1**

(12) **FASCICULE DE BREVET EUROPEEN**

(45) Date de publication et mention de la délivrance du brevet:
**15.01.2025 Bulletin 2025/03**

(51) Classification Internationale des Brevets (IPC):
***G05D 1/00*** *(2024.01)* ***B64D 45/00*** *(2006.01)*
***G08G 5/00*** *(2006.01)*

(21) Numéro de dépôt: **21746712.5**

(52) Classification Coopérative des Brevets (CPC):
**G05D 1/0202; B64D 45/00; G08G 5/0021; G08G 5/0052**

(22) Date de dépôt: **20.07.2021**

(86) Numéro de dépôt international:
**PCT/EP2021/070224**

(87) Numéro de publication internationale:
**WO 2022/018065 (27.01.2022 Gazette 2022/04)**

(54) **DISPOSITIF ET PROCÉDÉ D'AIDE AU GUIDAGE D'AERONEF**

VORRICHTUNG UND VERFAHREN ZUR UNTERSTÜTZUNG DER FLUGZEUGFÜHRUNG

DEVICE AND METHOD FOR ASSISTING AIRCRAFT GUIDANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2020 FR 2007709**

(43) Date de publication de la demande:
**31.05.2023 Bulletin 2023/22**

(73) Titulaire: **THALES**
**92190 Meudon (FR)**

(72) Inventeurs:
- **DEWAS, Emmanuel**
  **31270 Frouzins (FR)**
- **DURAND, Geoffrey**
  **31036 Toulouse (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 3 267 156     EP-B1- 3 267 156**

- **CARY R. SPITZER: "The avionics handbook", 31 December 2001 (2001-12-31), XP055775557, Retrieved from the Internet <URL:https://avocado82.files.wordpress.com/2011/06/avionics-handbook.pdf> [retrieved on 20210212]**
- **ALLIGIER RICHARD: "APPRENTISSAGE ARTIFICIEL APPLIQUE A LA PREVISION DE TRAJECTOIRE D'AVION", 13 November 2014 (2014-11-13), XP055775408, Retrieved from the Internet <URL:https://oatao.univ-toulouse.fr/12286/1/alligier.pdf> [retrieved on 20210212]**

**Description**

**Domaine de l'invention**

L'invention concerne le domaine des systèmes de gestion de vol, et plus particulièrement celui de l'aide au guidage d'aéronef le long d'une trajectoire prédéfinie.

**Etat de la Technique**

L'une des fonctions d'un système de gestion de vol ou « Flight Management System » (FMS) en anglais, est de calculer une trajectoire (latérale et verticale) afin de guider un aéronef sur celle-ci pendant un vol. Dans la mesure du possible la trajectoire, et notamment la trajectoire latérale, est calculée pour être en cohérence avec des capacités techniques que l'aéronef peut suivre. Parmi les capacités techniques d'un aéronef, il y a un critère de roulis maximum que celui-ci doit être en mesure de respecter.

Aussi, un système de guidage d'aéronef sur une trajectoire, consiste notamment à guider celui-ci sur un axe latéral en pilotant son roulis pour l'asservir sur cette trajectoire, tout en respectant une valeur seuil de roulis (« roulis maximum ») qui est prédéfinie pour le type d'aéronef concerné. En effet, soit pour des raisons liées à la mécanique du vol, soit pour garantir la sécurité ou le confort des passagers, un aéronef ne peut pas dépasser un roulis maximum donné.

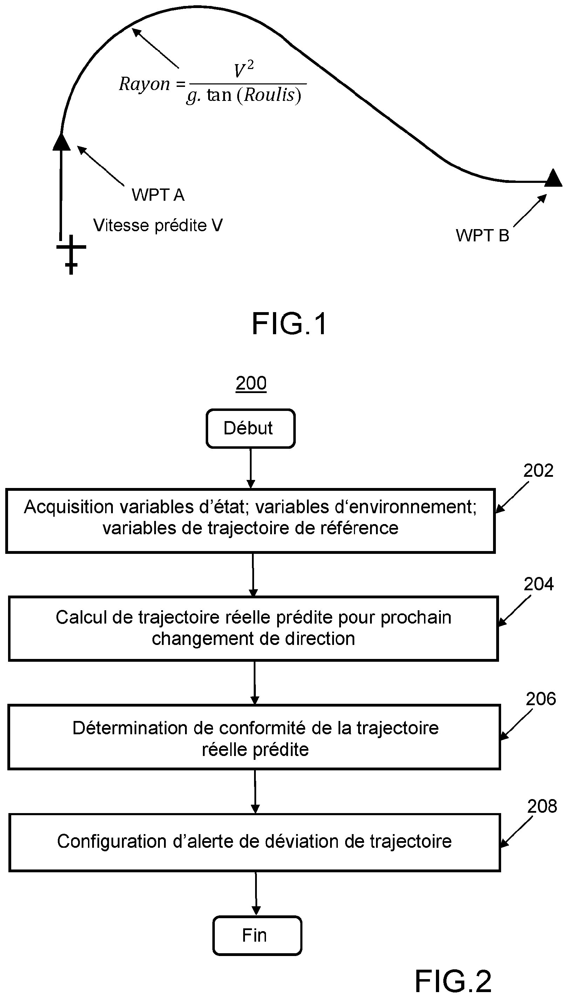

Dans les systèmes embarqués comme les FMS, la trajectoire qui est calculée doit permettre à l'aéronef de voler cette trajectoire tout en respectant le critère de roulis maximum. Ce type de calculateur permet de prédire la vitesse de l'aéronef aux différents points de cheminement (en anglais « waypoints » (WPT)) d'un virage et ajuster au besoin les rayons de virages. La figure 1 illustre une trajectoire à voler pour un aéronef sur un segment courbe, où le rayon du virage est calculé selon l'équation (1) suivante :

$$Rayon = \frac{V^2}{g.\tan(Roulis)}$$

avec V la vitesse prédite.

Afin d'éviter des virages à trop faible roulis et les inconvénients opérationnels qui y sont associés comme par exemple l'allongement de la distance et donc du temps de vol, la trajectoire est calculée avec un roulis cible qui est proche du roulis maximum. Généralement, une légère marge (nominalement 5°) est néanmoins prise en compte dans la construction de la trajectoire pour absorber les corrections de guidage pendant le vol du segment courbe.

Cependant dans certaines situations, le critère de roulis maximum ne peut pas être respecté et l'aéronef se retrouve alors en écart vis-à-vis de la trajectoire calculée.

Un premier cas où le roulis maximum peut ne pas être respecté est sur le long d'un segment courbe de trajectoire où la vitesse de l'aéronef n'est pas toujours constante. Une solution pour éviter le dépassement de roulis maximum consiste à prédire l'accélération de l'aéronef et d'en tenir compte dans le calcul du rayon de virage, afin de garantir une valeur maximale de roulis. Néanmoins ce calcul peut être erroné par de mauvaises prises en compte du vent réel et/ou une mauvaise modélisation des performances avion par exemple, entrainant alors un calcul de rayon ne pouvant être suivi par l'aéronef.

Un second cas réel où le roulis maximum n'est pas respecté, peut se produire pendant l'accélération d'un aéronef dans un virage. En effet, un inconvénient majeur de calculer un virage assurant de ne pas dépasser une valeur maximale de roulis, est de construire des grands virages qui ne sont pas toujours compatibles pour leur mise en pratique par des aéronefs. De tels grands virages peuvent entrainer un faible roulis en début de virage, un allongement de la distance de vol, mais aussi un survol de zones interdites comme des zones habitées. Un effet de ces conséquences, est que, volontairement du fait de ces contraintes opérationnelles, le rayon du virage est parfois sous-estimé dans le calcul, et l'aéronef est alors asservi sur cette trajectoire jusqu'à atteindre le roulis maximum, puis il s'écarte de la trajectoire.

Un troisième autre cas présentant le risque du non-respect d'un roulis maximum, est lié au fait qu'une trajectoire qui est calculée, est construite aussi en cohérence de l'attendu des cartes, c'est-à-dire avec une vitesse théorique imposée par les procédures, indépendamment de la vitesse réelle. La trajectoire calculée devient ainsi la référence, et par conséquent le rayon d'un virage peut être parfois sous-estimé au vu de la vitesse effective, et l'aéronef est alors asservi sur cette trajectoire jusqu'à atteindre le roulis maximum, puis il s'écarte de la trajectoire.

Quand un aéronef s'est écarté d'une trajectoire, les solutions connues se basent sur un système qui alerte une fois que l'aéronef se retrouve en écart vis-à-vis de cette trajectoire. L'alerte peut être faite à l'équipage par l'affichage de la valeur de l'écart latéral entre l'aéronef et cette trajectoire (aussi connu en anglais comme « crosstrack error » ou XTK), ou par l'actualisation de la trajectoire en temps réel pendant le vol du virage pour indiquer la trajectoire réelle de l'aéronef, ou encore par l'affichage de la trajectoire de vol basé sur le roulis courant. Il faut alors que l'équipage gère sur l'instant et en cours de problématique, la situation, soit en laissant l'aéronef dériver hors de la trajectoire si la situation le permet, soit en appliquant des corrections comme une réduction de la vitesse, une prise en main manuelle de l'aéronef.

L'inconvénient de ces solutions et d'une manière plus générale des solutions basées sur des alertes déclenchées a posteriori, est que ces alertes sont trop tardives par rapport à la survenue d'une situation problématique, car ces systèmes fournissent une information une fois qu'une erreur a été constatée.

Les systèmes d'alerte connus ne permettent pas d'anticiper une situation et de prévenir en avance de phase un équipage afin de lui permettre de réaliser des actions correctives en amont, comme par exemple réduire la vitesse de l'aéronef, pour éviter une erreur à venir.

Un but de l'invention est de palier les inconvénients des solutions d'alerte connues, et de proposer un dispositif prédictif d'alerte de suivi de trajectoire.

Un aperçu des techniques dans ce domaine peut être trouvé dans "The avionics handbook" édité par Cary R. Spitzer.

## Résumé de l'invention

Un objet de la présente invention est de proposer un procédé permettant de prédire une trajectoire réelle d'un aéronef et de pouvoir prévenir en avance de phase un équipage ou un système de guidage de l'impossibilité de voler une trajectoire de référence dans des conditions normales.

Un autre objet de l'invention est de proposer un dispositif qui comprend des moyens permettant de mettre en oeuvre le procédé revendiqué.

Avantageusement, le dispositif et le procédé de l'invention permettent de fournir une information à un équipage ou à un système de guidage dans un temps antérieur à la survenue d'une situation problématique, notamment celle où un aéronef va se trouver en écart d'une trajectoire prédéfinie.

Pour obtenir les résultats recherchés, des procédés, dispositifs et produits programme d'ordinateur sont décrits.

De manière générale, l'invention consiste à calculer pour un prochain changement de direction d'un aéronef (i.e. un virage), une trajectoire réelle prédite, et qui selon sa conformité ou non à une trajectoire de référence, va permettre de déclencher une alerte vers un équipage et/ou vers un système de guidage.

En particulier, un procédé d'aide au guidage d'aéronef, opéré par une plateforme de calcul pour aéronef, comprend au moins :

- une étape d'acquisition de variables d'état caractérisant un aéronef en vol, de variables d'environnement caractérisant l'environnement de l'aéronef et de variables de trajectoire caractérisant une trajectoire de référence de l'aéronef,
- une étape de calcul de trajectoire réelle prédite pour un prochain changement de direction de l'aéronef, à partir desdites variables d'état, desdites variables d'environnement et desdites variables de trajectoire de référence,
- une étape de détermination de conformité pour déterminer si la trajectoire réelle prédite qui est calculée est conforme ou non à la trajectoire de référence ; et
- une étape de configuration d'une alerte de déviation de trajectoire, lorsque la trajectoire réelle prédite n'est pas conforme à la trajectoire de référence.

Selon des modes de réalisations alternatifs, le calcul de trajectoire réelle prédite peut se faire selon deux variantes distinctes. Dans une première mise en oeuvre, le procédé va permettre de prédire le roulis réel de l'aéronef pour le prochain virage. Dans une autre mise en oeuvre du procédé, c'est un calcul de prédiction de la position réelle de l'aéronef pour le prochain virage.

Selon des modes de réalisations alternatifs ou combinés :

- l'étape de calcul de trajectoire réelle prédite consiste à calculer des variables de prédiction caractérisant la prédiction d'un roulis de l'aéronef et/ou la prédiction d'une position de l'aéronef, pour un prochain changement de direction de l'aéronef ;
- l'étape de détermination de conformité consiste à comparer les valeurs desdites variables de prédiction à des valeurs seuils prédéfinies pour la trajectoire de référence de l'aéronef ;
- l'étape de détermination de conformité consiste à vérifier si la valeur de roulis prédit est supérieure à une valeur prédéfinie de roulis maximum et/ou à vérifier si la position prédite de l'aéronef correspond à une valeur d'écart latéral supérieure à une valeur prédéfinie d'écart latéral maximum ;
- l'étape de calcul de trajectoire réelle prédite comprend une étape initiale de détermination de position de l'aéronef par rapport à un prochain changement de direction, permettant de déterminer si l'aéronef se situe avant le prochain changement de direction ou si l'aéronef est déjà engagé dans le virage correspondant au changement de direction ;
- l'étape de calcul de trajectoire réelle prédite consiste à mettre en oeuvre une fonction de simulation pour prédire une trajectoire réelle de l'aéronef, soit depuis le début du virage pour le virage à voler, soit depuis la position courante de l'aéronef dans le virage pour le segment de virage restant à voler.

L'invention concerne aussi un dispositif pour l'aide au guidage d'aéronef qui comprend des moyens pour :

- acquérir des variables d'état caractérisant un aéronef en vol, des variables d'environnement caractérisant l'environnement de l'aéronef et des variables de trajectoire caractérisant une trajectoire de référence de l'aéronef,
- calculer une trajectoire réelle prédite de l'aéronef pour un prochain changement de direction de l'aéronef, à partir desdites variables d'état, desdites variables d'environnement et desdites variables de trajectoire de référence,
- déterminer si la trajectoire réelle prédite qui est calculée est conforme ou non à la trajectoire de référence ; et
- configurer une alerte de déviation de trajectoire, lorsque la trajectoire réelle prédite n'est pas conforme à la trajectoire de référence.

Le dispositif comprend de plus des moyens configurés pour opérer les étapes du procédé revendiqué.

L'invention couvre aussi un système de gestion de vol (FMS) ou un système de calcul embarqué de type EFB qui comprend un dispositif d'aide au guidage d'aéronef tel que revendiqué.

L'invention concerne aussi un produit programme d'ordinateur qui comprend des instructions de code permettant d'effectuer les étapes du procédé revendiqué, lorsque le programme est exécuté sur un ordinateur.

**Description des figures**

Différents aspects et avantages de l'invention vont apparaitre en appui de la description d'un mode préféré d'implémentation de l'invention mais non limitatif, avec référence aux figures ci-dessous :

La figure 1 illustre une trajectoire à voler pour un aéronef sur un segment courbe ;
La figure 2 illustre les étapes générales du procédé de l'invention dans un mode de réalisation ;
Les figures 3a et 3b illustrent deux variantes d'affichage d'une trajectoire réelle prédite pour un segment courbe selon le calcul d'un roulis réel prédit;
Les figures 4a et 4b illustrent deux variantes d'affichage d'une trajectoire réelle prédite pour un segment courbe selon le calcul d'une position réelle prédite;
La figure 5 illustre les étapes d'une variante de réalisation du procédé de l'invention ;
La figure 6 et la figure 7 sont des représentations des paramètres utilisés pour le calcul de prédiction de roulis réel ;
La figure 8 et la figure 9 sont des représentations des paramètres utilisés pour la calcul de prédiction de position réelle ; et
La figure 10 illustre une structure d'un système de gestion de vol (FMS) permettant d'implémenter le dispositif et le procédé de l'invention.

**Description détaillée de l'invention**

Lorsqu'un avion effectue un trajet entre deux aéroports, un plan de vol (FPLN) est déposé, afin d'en informer les services de la navigation aérienne. Ce dernier contient tous les renseignements spécifiés au sujet du vol projeté ou d'une partie du vol, et notamment :

- le type d'avion ;
- l'heure de départ ;
- le premier niveau de vol demandé pour la croisière ;
- l'équipement de bord ;
- la route prévue.

Le plan de vol entre un point de départ et un point d'arrivée à atteindre contient un ensemble des points de cheminement (en anglais « waypoints » (WPT)) ordonnés de façon prédéterminée, où à chaque point de cheminement, un changement de cap ou d'altitude ou de vitesse doit avoir lieu. Un waypoint est défini par une position géographique, des coordonnées de latitude, et de longitude. Tous ces points peuvent être choisis parmi des points prédéfinis dans une base de données de navigation, et peuvent correspondre à des aéroports, à des balises de radionavigation, etc...

Pour suivre son plan de vol, un avion utilise un système de gestion de vol (« Flight Management System » (FMS) en anglais). Le FMS est un système embarqué d'aide à la navigation, qui intègre des informations sur la performance de l'avion et sur sa position, informations provenant de capteurs de navigation, du plan de vol qui est stocké et de saisies manuelles. Son but est d'assister les pilotes, en fournissant via une interface homme-machine adaptée, des instructions de pilotage, ou de permettre un guidage automatique de l'avion le long de la trajectoire lorsqu'il est couplé avec le pilote automatique. Afin de guider l'aéronef pour suivre son plan de vol, le FMS utilise différents capteurs pour déterminer la position courante de l'avion (PPOS) et la précision de cette position. La précision est définie comme le degré de conformité entre la position estimée, mesurée ou souhaitée et la position réelle de l'aéronef à un instant donné. Le FMS permet aussi au pilote de modifier le plan de vol, pendant le vol, pour diverses raisons comme un retard induit par de mauvaises conditions atmosphériques à éviter, ou par des requêtes imposées par les organes de contrôle aérien (ATM). De manière régulière, à partir des points du plan de vol, le FMS calcule une trajectoire latérale. À partir du niveau de croisière et des contraintes d'altitude, le FMS calcule aussi un profil vertical. À partir des contraintes de vitesse et des vitesses optimisées de chaque phase de vol et en fonction d'un indice de coût qui est choisi par la compagnie aérienne, le FMS calcule un profil de vitesse. Compte tenu du plan de vol et de la position de l'avion, le FMS calcule la trajectoire de référence à suivre qui est une succession de segments droits et courbes. Les points reliant les segments de la trajectoire de référence peuvent correspondre à des points de cheminement du plan de vol ou être différents.

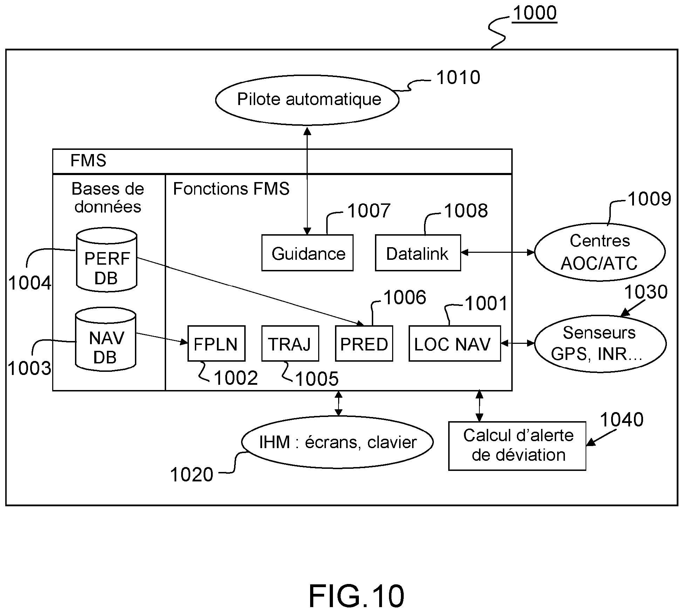

La figure 10 illustre une structure d'un système de gestion de vol permettant d'implémenter le procédé de l'invention. Par exemple, le système peut être un système de gestion de vol de type FMS (1000), comprenant les composants adaptés pour réaliser les fonctionnalités connues et intégrant de plus un module de calcul d'alerte (1040) configuré pour mettre en oeuvre le procédé de l'invention.

Un système connu de type FMS dispose d'une interface homme-machine (1020) comprenant par exemple un clavier et un écran d'affichage, ou bien simplement un écran d'affichage tactile, ainsi que des modules permettant de réaliser au moins les fonctions suivantes :

- Navigation (LOCNAV) (1001), pour effectuer la localisation optimale de l'aéronef en fonction des moyens de géolocalisation (1030) tels que le géo-positionnement par satellite ou GPS, GALILEO, les balises de radionavigation VHF, les centrales inertielles. Ce module communique avec les dispositifs de géolocalisation ;
- Plan de vol (FPLN) (1002), pour saisir les éléments géographiques constituant le squelette de la route à suivre, tels que les points imposés par les procédures de départ et d'arrivée, les points de cheminement, les routes aériennes ou « air-ways » selon la dénomination anglo-saxonne ;
- Base de données de navigation (NAVDB) (1003), pour construire des routes géographiques et des procédures à partir de données incluses dans les bases relatives aux points, balises, legs d'interception ou d'altitude... ;
- Base de données de performance, (PERFDB) (1004), contenant des paramètres de performances aérodynamiques et moteurs de l'appareil ;
- Trajectoire (TRAJ) (1005), pour construire une trajectoire 4D optimisée et continue, à partir des points du plan de vol et des contraintes associées, respectant les performances de l'aéronef et les contraintes de confinement (RNP) ;
- Prédictions (PRED) (1006), pour fournir les prédictions (Altitude, temps, fuel) sur tous les points du plan de vol ;
- Guidage (GUID) (1007), pour fournir des commandes permettant de guider l'aéronef le long du plan latéral, du profil vertical et du profil de vitesse ;
- Liaison de données numériques (DATALINK) (1008) pour communiquer avec les centres de contrôle et les autres aéronefs (1009).

Selon un mode d'implémentation, le procédé revendiqué est porté par une partition spécifique d'une plateforme matérielle spécifique à l'avionique mais différente de celle du FMS, comme par exemple un dispositif de type « Electronic Flight Bag » (EFB). Selon un autre mode de réalisation préféré, ce calcul est effectué sur la plateforme d'exécution du FMS, par des composants (1040) adaptés aux calculs. En effet, l'avènement de l'avionique modulaire intégrée sur les aéronefs récents, a permis la définition de plateformes d'exécution et de communication numérique entre les fonctions. Cette évolution a toutefois entraîné une augmentation de la complexité - notamment la complexité interne des fonctions mais aussi la complexité du processus de configuration du système avionique - et des besoins de performances grandissants et d'optimisation de ressources. Dans ce contexte, les nouvelles plateformes matérielles sont dotées de capacités de gestion (des opérations, de la sécurité et de maintenance), d'optimisation d'énergie et de localisation, qui vont au-delà des fonctions standards des plateformes connues.

Selon un autre aspect, l'invention concerne un produit programme d'ordinateur comprenant des instructions de code permettant d'effectuer les étapes du procédé selon l'invention. Le procédé peut s'implémenter à partir d'éléments matériel et/ou logiciel. Le procédé peut être disponible en tant que produit programme d'ordinateur sur un support lisible par ordinateur. Le procédé peut être implémenté sur un système pouvant utiliser un ou plusieurs circuits électronique dédiés ou un circuit à usage général. La technique du procédé selon l'invention peut se réaliser sur une machine de calcul reprogrammable (un processeur ou un microcontrôleur par exemple) exécutant un programme comprenant une séquence d'instructions non transitoires, ou sur une machine de calcul dédiée (par exemple un ensemble de portes logiques comme un FPGA ou un ASIC, ou tout autre module matériel). Les différents modules du système selon l'invention peuvent être implémentés sur un même processeur ou sur un même circuit, ou distribués sur plusieurs processeurs ou plusieurs circuits. Les modules du système selon l'invention consistent en des moyens de calcul incluant un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici.

La figure 2 illustre les étapes générales du procédé de l'invention dans un mode de réalisation. Généralement, le procédé consiste à faire un calcul de prédiction de trajectoire réelle (appelée « trajectoire réelle prédite ») pour un prochain changement de direction d'un aéronef, puis de générer une alerte si la trajectoire réelle prédite ne respecte pas une trajectoire de référence ou trajectoire prédéfinie.

Le procédé 200 débute par une étape 202 d'acquisition de plusieurs types de variables relatives à un aéronef, et notamment :

- des variables d'état comprenant au moins : la situation courante de l'aéronef comme sa position, son roulis, sa vitesse, son altitude.
- des variables d'environnement comprenant au moins : la météo courante ou prévue autour de l'aéronef.
- des variables de trajectoire de référence comprenant au moins : le segment courbe permettant de réaliser le prochain changement de direction, le roulis maximal de l'aéronef et au besoin les évolutions verticales planifiées en terme de vitesse ou d'altitude.

Dans une étape suivante 204, le procédé permet d'utiliser les valeurs courantes des différentes variables pour faire un calcul de prédiction de la trajectoire réelle de l'aéronef pour un prochain changement de direction de l'aéronef. Dans le contexte de l'invention, un changement de direction correspond à un virage ou segment courbe caractérisé par différents paramètres, notamment :

- un début de virage ;
- une fin de virage ;
- une rayon R du virage.

Le calcul de la trajectoire réelle prédite se fait pour un segment courbe défini par des paramètres de début, de fin et de rayon du virage. Dans un mode de réalisation, l'étape de calcul de la trajectoire réelle prédite consiste à calculer des variables de prédiction caractérisant la prédiction d'un roulis réel de l'aéronef le long du segment courbe. Dans un autre mode de réalisation, l'étape de calcul de la trajectoire réelle prédite consiste à calculer des variables de prédiction caractérisant la prédiction d'une position réelle de l'aéronef pendant le virage.

Dans une étape suivante 206, le procédé permet de déterminer la conformité de la trajectoire réelle prédite, à la trajectoire de référence de l'aéronef pour le virage concerné. L'étape de détermination de conformité peut consister à comparer les valeurs des variables de prédiction de roulis réel ou à comparer les valeurs des variables de prédiction de position réelle de l'aéronef, à des valeurs seuils prédéfinies pour la trajectoire de référence de l'aéronef.

Dans un mode de réalisation, la comparaison consiste à vérifier si la valeur de roulis réel prédit est supérieure ou non à une valeur prédéfinie de roulis maximum. Dans un autre mode de réalisation, la comparaison consiste à vérifier si l'écart latéral de la position réelle prédite de l'aéronef est supérieur ou non à une valeur prédéfinie d'écart latéral maximum.

Après l'étape de détermination de conformité, le procédé permet de configurer une alerte de déviation de trajectoire (étape 208) selon le résultat de l'étape précédente.

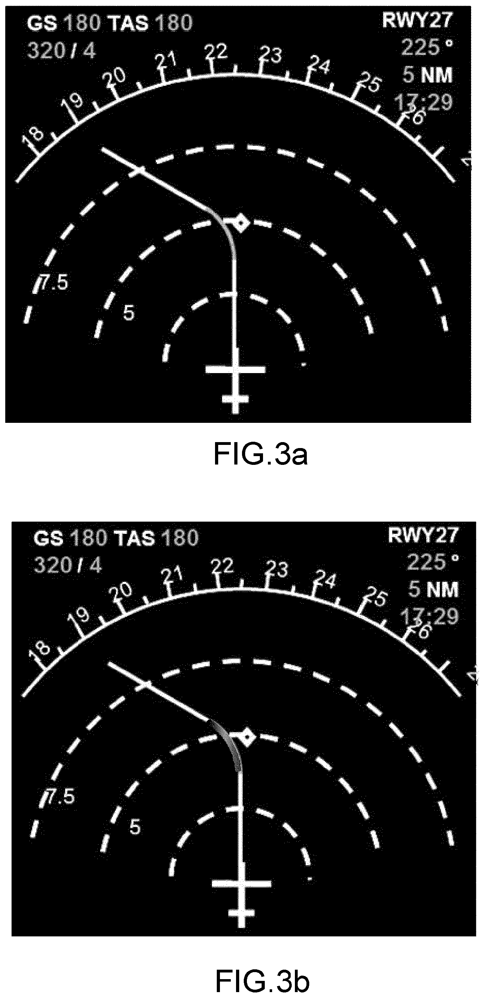

Dans un mode de réalisation de prédiction du roulis réel de l'aéronef, le procédé permet de générer une information alertant l'équipage et/ou une information communiquée à un système embarqué, si le roulis réel prédit de l'aéronef dépasse le roulis maximal prévu (en considérant si besoin une marge), traduisant une non-conformité de trajectoire. Dans un mode de réalisation, une alerte peut consister en une modification de l'affichage de la trajectoire sur un écran de l'aéronef, par exemple en modifiant la couleur de la portion de la trajectoire affichée en cas de prédiction de dépassement du roulis maximal. Ainsi, dans une réalisation illustrée sur la figure 3a, la trajectoire réelle prédite pour le prochain segment courbe peut être affichée pour l'équipage dans une couleur spécifique (par exemple ambre) dédiée à l'alerte de déviation de trajectoire, et différente de la couleur courante (par exemple verte), si le roulis réel prédit dépasse un seuil prédéfini pour le prochain virage. Dans une autre réalisation illustrée sur la figure 3b, la trajectoire réelle prédite pour le prochain segment courbe peut être affichée pour l'équipage avec une couleur spécifique dédiée à l'alerte de déviation de trajectoire, et différente de la couleur courante (par exemple verte), et dont l'intensité varie le long du segment courbe selon la valeur de roulis réel prédite vis-à-vis du roulis maximal prédéfini.

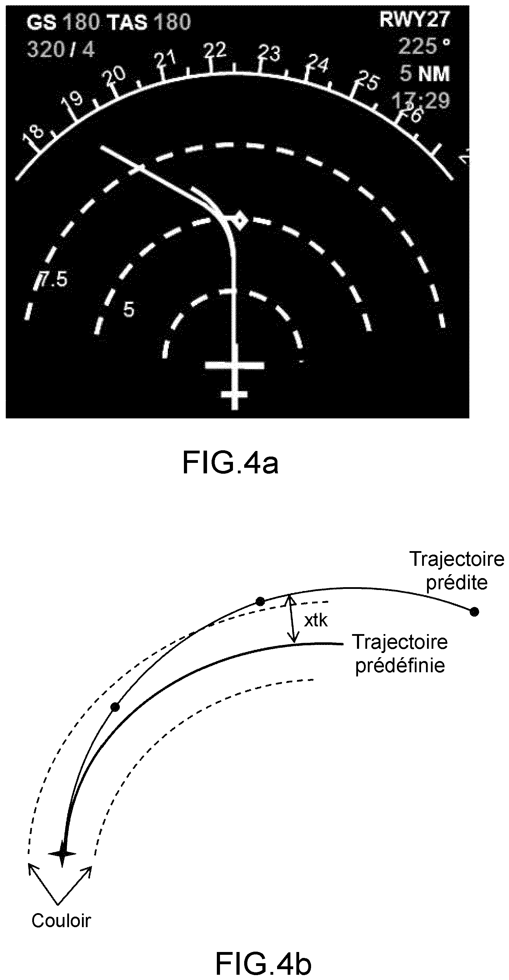

Dans un mode de réalisation de prédiction de position réelle de l'aéronef, le procédé permet de générer une information alertant l'équipage et/ou une information communiquée à un système embarqué, quant à la trajectoire réelle prédite de l'aéronef, c'est-à-dire la trajectoire que volera réellement l'aéronef, et donc informer l'équipage sur l'écart latéral qu'aura l'aéronef par rapport à la trajectoire prédéfinie. Dans une réalisation illustrée sur la figure 4a, la trajectoire réelle prédite pour un prochain segment courbe selon le calcul d'une position réelle prédite, peut être affichée dans une couleur différente (par exemple blanche) en superposition de la trajectoire prédéfinie (affichée par exemple en vert). Dans une autre réalisation illustrée sur la figure 4b, un affichage de la trajectoire réelle prédite peut se faire par rapport à un couloir à respecter autour de la trajectoire prédéfinie (connu dans les procédures RNP « Required Navigation Performance »), et refléter le long du segment courbe l'écart latéral maximum observé ($XTK_{max}$) entre la trajectoire réelle prédite et la trajectoire prédéfinie.

Dans d'autres modes de réalisation alternatifs ou combinés aux précédents modes décrits, la configuration d'une alerte peut consister à générer un ou plusieurs messages (visuels, sonores) d'alerte. L'homme du métier pourra mettre en oeuvre d'autres formes d'alerte adaptées au contexte d'application de l'invention.

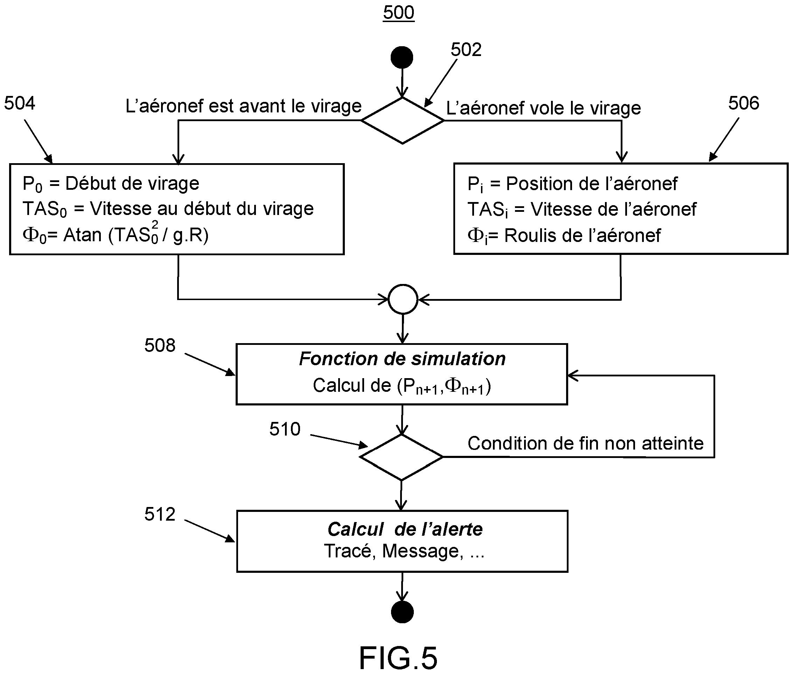

La figure 5 illustre des étapes d'une variante de réalisation du procédé de l'invention. Dans une première étape 502, le procédé 500 de la figure 5 permet de déterminer où se trouve l'aéronef par rapport à un prochain changement de direction du plan de vol, i.e. soit l'aéronef se situe avant le virage, soit l'aéronef est déjà engagé dans le virage.

Si l'aéronef se situe en amont du virage, le procédé dans une étape suivante 504, permet d'acquérir en plus de l'ensemble des variables générales d'état, d'environnement et de trajectoire de référence (étape 202 de la figure 2), des paramètres de départ définissant :

- un virage comme un segment courbe de rayon R, avec un point de départ $P_0$ caractérisé par sa latitude et sa longitude, et une course de départ $crs_0$ de ce segment courbe ;
- une vitesse de départ $TAS_0$ de l'aéronef au départ du virage. Dans un mode de réalisation, la vitesse de départ est basée sur un profil de vitesse prédite. En effet, les systèmes de calcul de trajectoire des FMS permettent de connaitre des prédictions de vitesses le long des trajectoires. Aussi, le paramètre de vitesse de départ $TAS_0$ de l'aéronef au départ du virage peut être issu des données du FMS comme une prédiction de vitesse vraie (TAS pour « True Air Speed ») de l'aéronef le long de ce segment courbe. Dans d'autres modes de réalisation, le paramètre de vitesse de départ est obtenu par des données sur la prédiction de vitesse calibrée (CAS pour « Calibrated Air Speed » et l'altitude ;
  un roulis de départ $\Phi_0$ de l'aéronef, égal au roulis de l'aéronef à la position au point de départ $P_0$, et qui peut être défini par l'équation suivante : $\Phi_0 = Atan(TAS_0^2 / g.R)$ si on considère une anticipation de la mise en virage. Dans un mode de réalisation, une autre valeur de roulis de départ peut être prise en compte selon le type de guidage utilisé. Par exemple, une valeur nulle de roulis de départ peut être utilisée si on considère aucune anticipation de mise en virage ;
- un vent prédit dans le virage, caractérisé par deux valeurs : $Vent_{crs}$ pour la course d'où vient le vent, et $Vent_{mag}$ pour la magnitude ou vitesse du vent.

Si l'aéronef vole déjà le virage, le procédé dans une étape suivante 506, permet, en plus de l'ensemble des variables générales d'état, d'environnement et de trajectoire de référence (étape 202 de la figure 2), et des paramètres de départ (étape 504), d'acquérir des paramètres courant pour l'aéronef, définissant :

- la position courante de l'aéronef $P_i$ ;
- la vitesse courante de l'aéronef $TAS_i$ ; et
- le roulis courant de l'aéronef $\Phi_i$.

Dans une étape suivante 508, le procédé permet de mettre en oeuvre une fonction de simulation, pour prédire une trajectoire réelle de l'aéronef, soit depuis le début du virage pour le segment courbe à voler, soit depuis la position courante de l'aéronef dans le virage pour le segment courbe restant à voler. Le calcul de prédiction peut selon les modes de réalisation se faire soit par une prédiction de roulis réel de l'aéronef, soit par une prédiction de position réelle de l'aéronef.

Dans le mode de réalisation de prédiction de roulis réel, un module de simulation est configuré pour calculer le roulis réel prédit de l'aéronef, à partir des équations suivantes :

$$CRS_n = CRS_0 + n \times \frac{dx}{R}$$ pour les segments courbes vers la droite, ou

$$CRS_n = CRS_0 - n \times \frac{dx}{R}$$ pour les segments courbes vers la gauche, avec dx un paramètre qui définit la valeur du pas permettant la discrétisation du calcul ; et

$$V_n = TAS_n + Vent_{mag} \times \cos(Vent_{crs} + 180° - Crs_n).$$

Le roulis réel prédit est alors obtenu par l'équation suivante :

$$\Phi_n = \tan^{-1}\left(\frac{V_n^2}{g.R}\right)$$ où 'g' est la constante gravitationnelle.

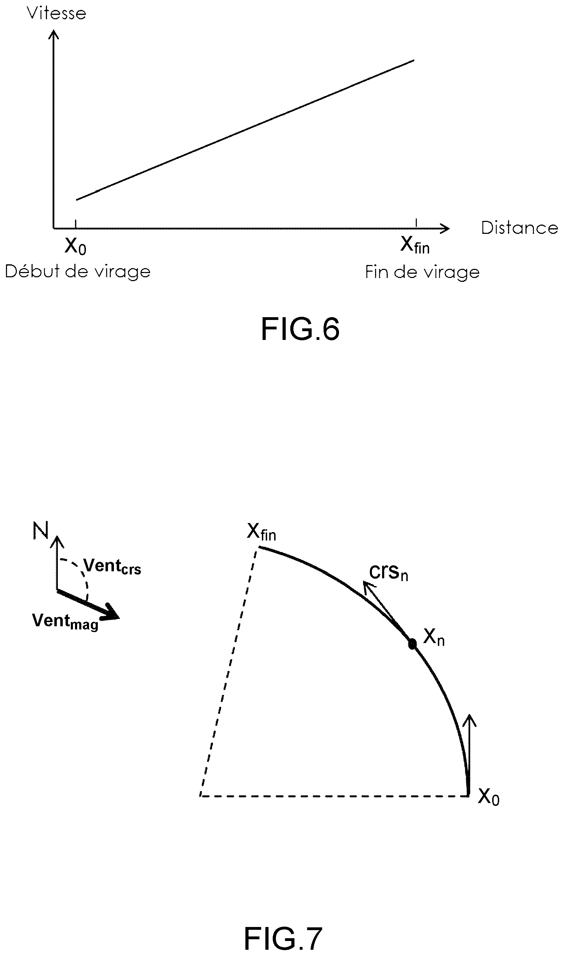

La figure 6 et la figure 7 sont des représentations des paramètres utilisés pour le calcul de prédiction de roulis réel. Le module de simulation permet de calculer le roulis réel prédit pour 'n' positions $X_n$ de l'aéronef le long du segment courbe, entre une position de début ($X_0$ ou $X_i$) et une position de fin $X_{fin}$ (itération de l'étape 510).

Le module de simulation est de plus configuré pour vérifier la valeur de prédiction obtenue à chaque position (étape 206 de la figure 2), et pour générer le cas échéant une alerte de déviation de trajectoire (étape 512) selon une configuration d'alerte prédéfinie.

Ainsi, dans le mode de réalisation appliqué à la prédiction de roulis réel de l'aéronef, si pour au moins une des 'n' positions, le roulis réel prédit est plus grand en valeur absolue que le roulis maximal prédéfini, lequel peut être fixé à l'avance ou bien défini comme le roulis trajectoire additionné d'une marge prédéfinie, alors le segment courbe est considéré comme non volable et une alerte peut être levée (figures 3a ; figure 3b ; message).

Dans le mode de réalisation de prédiction de position réelle, un module de simulation est configuré pour calculer avec un pas de temps $d_t$ prédéfini, une position théorique de l'aéronef associée à un roulis ($P_{n+1}$, $\Phi_{n+1}$) qui est fonction de sa position précédente ($P_n$, $\Phi_n$). L'homme du métier peut adapter la fonction de simulation de manière plus ou moins complexe selon la précision du calcul attendue, ou encore selon des contraintes techniques d'implémentation, comme par exemple un temps d'exécution du calcul requis.

Ainsi dans une implémentation particulière, la fonction de simulation peut se baser sur les équations usuelles de la mécanique du vol :

$$V_n = TAS_n + Vent_{mag}.\cos(Vent_{crs} + 180° - crs_n) \; ;$$

et

$$crs_{n+1} = crs_n + \frac{g.\tan(\Phi_n)}{V_n}.dt \; .$$

La position réelle prédite de l'aéronef est alors obtenue par l'équation suivante :

$$P_{n+1} = PBD\left(P_n, \frac{crs_n + crs_{n+1}}{2}, V_n.dt\right)$$ , où 'PBD' est une fonction connue usuelle de calcul d'une position géographique à partir d'une position de départ, d'une direction et d'une distance.

Si $P_{n+1}$ correspond à une position où l'aéronef se trouvera à l'intérieur d'un virage à droite ou à l'extérieur d'un virage à gauche, le roulis est calculé selon l'équation suivante :

$$\Phi_{n+1} = \text{Max}(-\Phi_{max}, \text{Min}(\Phi_{max}, \Phi_n - TauxDeRoulis.dt)).$$

Si $P_{n+1}$ correspond à une position où l'aéronef ne se trouvera pas soit à l'intérieur d'un virage à droite, soit à l'extérieur d'un virage à gauche, le roulis est calculé selon l'équation suivante :

$$\Phi_{n+1} = \text{Max}(-\Phi_{max}, \text{Min}(\Phi_{max}, \Phi_n + TauxDeRoulis.dt)).$$

La fonction de simulation opère tant qu'une condition de fin n'est pas atteinte (étape 510). Selon différentes options, une condition de fin de simulation peut être définie par:

- l'atteinte d'un certain changement de course, par la vérification de la condition: $|crs_{fin} - crs_0| > Seuil$ ;
- le parcours d'une certaine distance de vol ;
- le parcours d'un certain temps de vol ; ou encore
- la rejointe d'une trajectoire prédéfinie.

A partir des résultats de la simulation, le procédé permet de calculer une suite de segments permettant de tracer une trajectoire réelle prédite de l'aéronef. Cette suite de segments peut être au choix une suite de segments droits définis par des positions $[P_n, P_{n+1}]$, ou une suite d'arcs de cercle définis par une position de départ $P_n$, un roulis de départ $\Phi_n$, un

$$R = \frac{V_n^2}{g.tan(\Phi_n)}$$

rayon et une position de fin $P_{n+1}$.

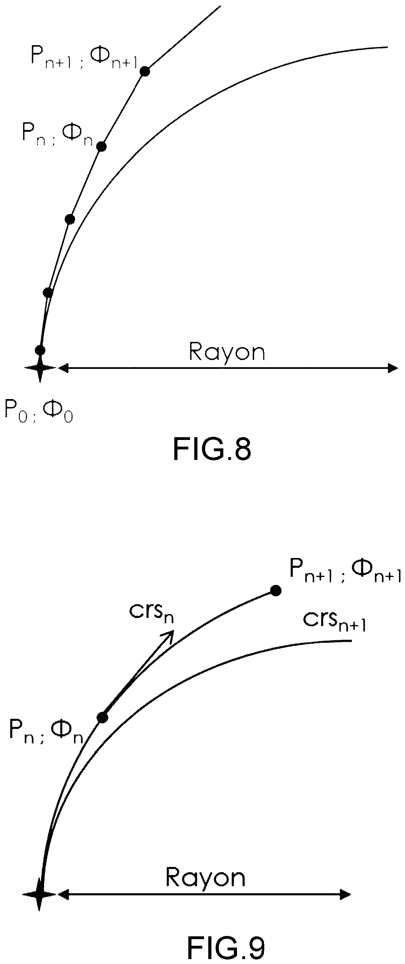

Les figures 8 et 9 sont des représentations des paramètres utilisés pour le calcul de prédiction de position réelle, sur uns suite de segments droits (figure 8) et sur une suite d'arcs de cercle (figure 9).

Le module de simulation est de plus configuré pour vérifier la conformité de la trajectoire réelle prédite à une trajectoire prédéfinie, et pour générer le cas échéant une alerte de déviation de trajectoire (étape 512) selon une configuration d'alerte prédéfinie.

Ainsi, dans le mode de réalisation appliqué à la prédiction de position réelle de l'aéronef, une alerte peut être générée (figure 4a ; figure 4b ; message), si la valeur de l'écart latéral maximum observé ($XTK_{max}$) entre la trajectoire réelle prédite et la trajectoire prédéfinie n'est pas conforme à une valeur maximale définie par rapport à un couloir (RNP) à respecter autour de la trajectoire prédéfinie.

Ainsi, la solution décrite permet de pouvoir informer l'équipage d'un aéronef ou un autre système (un système embarqué ou un système de contrôle aérien) en avance de phase d'un problème de suivi de trajectoire. Avantageusement, l'annonce et l'alerte a priori, permet d'anticiper une résolution de problème de suivi de trajectoire, et ainsi tant de réduire la charge du pilote que d'améliorer la sécurité du vol.

En effet, sur certains aéroports, la procédure doit être suivie précisément afin de garantir la séparation de l'aéronef avec le relief (procédure connue de RNP-AR). Or, à ce jour la sécurité est uniquement assurée par une formation préalable des pilotes afin de garantir que la trajectoire sera bien suivie. L'apport du procédé de l'invention permet de réaliser une surveillance, par le pilote ou bien par un système, afin d'alerter sur le non-respect de cette procédure.

De plus, dans certaines configurations du FMS, il est souhaité de calculer la trajectoire avec la vitesse planifiée au lieu de la vitesse prédite, ceci afin d'avoir une trajectoire au plus proche de la procédure officielle. Avec cette invention il est possible d'informer l'équipage sur le respect ou non de cette trajectoire par le système de guidage et de prendre les mesures nécessaires afin d'assurer le bon déroulé du vol.

En résumé, l'invention apporte des avantages particuliers sur :

- la charge de travail, en permettant une anticipation de la résolution d'un problème de suivi de trajectoire ; et
- la sécurité, en offrant une alerte anticipée d'un non-respect d'un virage.

La présente description illustre une implémentation préférentielle de l'invention, mais n'est pas limitative. Des exemples ont été choisis pour permettre une bonne compréhension des principes de l'invention, et une application concrète, mais ils ne sont pas exhaustifs et doivent permettre à l'homme du métier d'apporter des modifications et des variantes d'implémentation en gardant les mêmes principes.

**Revendications**

1. Procédé d'aide au guidage d'aéronef, le procédé étant opéré par une plateforme de calcul pour aéronef et comprenant au moins :

    - une étape d'acquisition de variables d'état caractérisant un aéronef en vol, de variables d'environnement caractérisant l'environnement de l'aéronef et de variables de trajectoire caractérisant une trajectoire de référence de l'aéronef;

    **caractérisé en ce que** le procédé comprend en outre:

    - une étape de calcul de trajectoire réelle prédite consistant à calculer des variables de prédiction à partir desdites variables d'état, variables d'environnement et variables de trajectoire de référence, les variables de prédiction caractérisant la prédiction d'un roulis réel et/ou d'une position réelle de l'aéronef pour un prochain changement de direction de l'aéronef;

        - une étape de détermination de conformité pour déterminer si la trajectoire réelle prédite qui est calculée est conforme ou non à la trajectoire de référence ; et
        - si la trajectoire réelle prédite n'est pas conforme à la trajectoire de référence, une étape de configuration d'une alerte de déviation de trajectoire informant du roulis et/ou de l'écart latéral de l'aéronef par rapport à la trajectoire de référence, sur le prochain changement de direction.

2. Le procédé selon la revendication 1 dans lequel l'étape de détermination de conformité consiste à comparer les valeurs desdites variables de prédiction à des valeurs seuils prédéfinies pour la trajectoire de référence de l'aéronef.

3. Le procédé selon la revendication 2 dans lequel l'étape de détermination de conformité consiste à vérifier si la valeur de roulis réel prédit est supérieure à une valeur prédéfinie de roulis maximum et/ou à vérifier si la position réelle prédite de l'aéronef correspond à une valeur d'écart latéral supérieure à une valeur prédéfinie d'écart latéral maximum.

4. Le procédé selon l'une quelconque des revendications 1 à 3 dans lequel l'étape de calcul de trajectoire réelle prédite comprend une étape initiale de détermination de position de l'aéronef par rapport à un prochain changement de direction, permettant de déterminer si l'aéronef se situe avant le prochain changement de direction ou si l'aéronef est déjà engagé dans le virage correspondant au changement de direction.

5. Le procédé selon la revendication 4 dans lequel l'étape de calcul de trajectoire réelle prédite consiste à mettre en oeuvre une fonction de simulation pour prédire une trajectoire réelle de l'aéronef, soit depuis le début du virage pour le virage à voler, soit depuis la position courante de l'aéronef dans le virage pour le segment de virage restant à voler.

6. Un dispositif d'aide au guidage d'aéronef comprenant des moyens pour :

- acquérir des variables d'état caractérisant un aéronef en vol, des variables d'environnement caractérisant l'environnement de l'aéronef et des variables de trajectoire caractérisant une trajectoire de référence de l'aéronef;

**caractérisé en ce que** le dispositif comprend en outre des moyens pour:

- calculer une trajectoire réelle prédite de l'aéronef à partir desdites variables d'état, variables d'environnement et variables de trajectoire de référence, en calculant des variables de prédiction caractérisant la prédiction d'un roulis réel et/ou d'une position réelle de l'aéronef pour un prochain changement de direction de l'aéronef;

- déterminer si la trajectoire réelle prédite calculée est conforme ou non à la trajectoire de référence ; et
- configurer une alerte de déviation de trajectoire si la trajectoire réelle prédite n'est pas conforme à la trajectoire de référence, l'alerte étant configurée pour informer du roulis et/ou de l'écart latéral de l'aéronef par rapport à la trajectoire de référence, sur le prochain changement de direction.

7. Le dispositif selon la revendication 6 comprenant de plus des moyens configurés pour opérer les étapes du procédé selon l'une quelconque des revendications 2 à 5.

8. Système de gestion de vol (FMS) comprenant un dispositif d'aide au guidage d'aéronef selon la revendication 6 ou la revendication 7.

9. Un produit programme d'ordinateur, ledit programme d'ordinateur comprenant des instructions de code permettant d'effectuer les étapes du procédé d'aide au guidage d'aéronef selon l'une quelconque des revendications 1 à 5, lorsque ledit programme est exécuté sur un ordinateur.

**Patentansprüche**

1. Verfahren zur Luftfahrzeugführungshilfe, wobei das Verfahren von einer Berechnungsplattform für ein Luftfahrzeug betrieben wird und mindestens Folgendes umfasst:

- einen Schritt zum Erfassen von Zustandsvariablen, die ein Luftfahrzeug beim Flug kennzeichnen, Umgebungsvariablen, die die Umgebung des Luftfahrzeugs kennzeichnen, und Flugbahnvariablen, die eine Referenzflugbahn des Luftfahrzeugs kennzeichnen;

**dadurch gekennzeichnet, dass** das Verfahren ferner Folgendes umfasst:

- einen Schritt zum Berechnen einer vorhergesagten realen Flugbahn, der darin besteht, Vorhersagevariablen aus den Zustandsvariablen, Umgebungsvariablen und Referenzflugbahnvariablen zu berechnen, wobei die Vorhersagevariablen die Vorhersage einer realen Rollbewegung und/oder einer realen Position des Luftfahrzeugs für eine anstehende Richtungsänderung des Luftfahrzeugs kennzeichnen;

- einen Schritt zum Bestimmen von Übereinstimmung, um zu bestimmen, ob die vorhergesagte reale Flugbahn, die berechnet wird, mit der Referenzflugbahn übereinstimmt; und
- wenn die vorhergesagte reale Flugbahn nicht mit der Referenzflugbahn übereinstimmt, einen Schritt zum Konfigurieren einer Flugbahnabweichungswarnung, die über die Rollbewegung und/oder über die seitliche Abweichung des Luftfahrzeugs in Bezug auf die Referenzflugbahn bei der anstehenden Richtungsänderung informiert.

2. Verfahren nach Anspruch 1, wobei der Schritt zum Bestimmen von Übereinstimmung darin besteht, die Werte der Vorhersagevariablen mit vordefinierten Schwellenwerten für die Referenzflugbahn des Luftfahrzeugs zu vergleichen.

3. Verfahren nach Anspruch 2, wobei der Schritt zum Bestimmen von Übereinstimmung darin besteht, zu überprüfen, ob der vorhergesagte reale Rollbewegungswert größer als ein vordefinierter maximaler Rollbewegungswert ist, und/oder zu überprüfen, ob die vorhergesagte reale Position des Luftfahrzeugs einem seitlichen Abweichungswert entspricht, der größer als ein vordefinierter maximaler seitlicher Abweichungswert ist.

4. Verfahren nach einem der Ansprüche 1 bis 3, wobei der Schritt zum Berechnen einer vorhergesagten realen Flugbahn einen anfänglichen Schritt zum Bestimmen der Position des Luftfahrzeugs in Bezug auf eine anstehende Richtungsänderung umfasst, zum Bestimmen, ob das Luftfahrzeug vor der anstehenden Richtungsänderung steht oder ob sich das Luftfahrzeug bereits in der Kurve entsprechend der Richtungsänderung befindet.

5. Verfahren nach Anspruch 4, wobei der Schritt zum Berechnen einer vorhergesagten realen Flugbahn darin besteht, eine Simulationsfunktion zu implementieren, um eine reale Flugbahn des Luftfahrzeugs vorherzusagen, entweder ab dem Beginn der Kurve für die zu fliegende Kurve oder ab der aktuellen Position des Luftfahrzeugs in der Kurve für das Kurvensegment, das noch zu fliegen ist.

6. Vorrichtung zur Luftfahrzeugführungshilfe, umfassend Mittel zum:

- Erfassen von Zustandsvariablen, die ein Luftfahrzeug beim Flug kennzeichnen, Umgebungsvariablen, die die Umgebung des Luftfahrzeugs kennzeichnen, und Flugbahnvariablen, die eine Referenzflugbahn des Luftfahrzeugs kennzeichnen;

**dadurch gekennzeichnet, dass** die Vorrichtung ferner Mittel umfasst zum:

- Berechnen einer vorhergesagten realen Flugbahn des Luftfahrzeugs aus den Zustandsvariablen, Umgebungsvariablen und Referenzflugbahnvariablen durch Berechnen von Vorhersagevariablen, die die Vorhersage einer realen Rollbewegung und/oder einer realen Position des Luftfahrzeugs für eine anstehende Richtungsänderung des Luftfahrzeugs kennzeichnen;
- Bestimmen, ob die berechnete vorhergesagte reale Flugbahn mit der Referenzflugbahn übereinstimmt; und
- Konfigurieren einer Flugbahnabweichungswarnung, wenn die vorhergesagte reale Flugbahn nicht mit der Referenzflugbahn übereinstimmt, wobei die Warnung dafür konfiguriert ist, über die Rollbewegung und/oder über die seitliche Abweichung des Luftfahrzeugs in Bezug auf die Referenzflugbahn bei der anstehenden Richtungsänderung zu informieren.

7. Vorrichtung nach Anspruch 6, ferner umfassend Mittel, die dafür konfiguriert sind, die Schritte des Verfahrens nach einem der Ansprüche 2 bis 5 zu betreiben.

8. Flugmanagementsystem (FMS), umfassend eine Vorrichtung zur Luftfahrzeugführungshilfe nach Anspruch 6 oder Anspruch 7.

9. Computerprogrammprodukt, wobei das Computerprogramm Code-Befehle zum Ausführen der Schritte des Verfahrens zur Luftfahrzeugführungshilfe nach einem der Ansprüche 1 bis 5 umfasst, wenn das Programm auf einem Computer ausgeführt wird.

**Claims**

1. A method for assisting aircraft guidance, the method being operated by a computation platform for aircraft and comprising at least:

- a step of acquisition of state variables characterising an aircraft in flight, of environment variables characterising the environment of the aircraft and of trajectory variables characterising a reference trajectory of the aircraft;

**characterised in that** the method further comprises:

- a step of calculation of a predicted real trajectory consisting in calculating prediction variables from said state variables, environment variables and reference trajectory variables, the prediction variables characterising the prediction of a real roll and/or of a real position of the aircraft for an upcoming change of direction of the aircraft;
- a step of determination of conformity to determine whether the predicted real trajectory which is calculated conforms to the reference trajectory; and
- if the predicted real trajectory does not conform to the reference trajectory, a step of configuration of a trajectory deviation alert informing of the roll and/or of the lateral deviation of the aircraft with respect to the reference trajectory on the upcoming change of direction.

2. The method according to claim 1, wherein the step of determination of conformity consists in comparing the values of said prediction variables to predefined threshold values for the reference trajectory of the aircraft.

3. The method according to claim 2, wherein the step of determination of conformity consists in verifying if the predicted real roll value is greater than a predefined maximum roll value and/or in verifying if the predicted real position of the aircraft corresponds to a lateral deviation value greater than a predefined maximum lateral deviation value.

4. The method according to any one of claims 1 to 3, wherein the step of calculation of a predicted real trajectory comprises an initial step of determination of the position of the aircraft with respect to an upcoming change of direction, for determining if the aircraft is located before the upcoming change of direction or if the aircraft has already engaged in the turn corresponding to the change of direction.

5. The method according to claim 4, wherein the step of calculation of a predicted real trajectory consists in implementing a simulation function to predict a real trajectory of the aircraft, either from the start of the turn for the turn that is to be flown, or from the current position of the aircraft in the turn for the turn segment that remains to be flown.

6. A device for assisting aircraft guidance comprising means for:

- acquiring state variables characterising an aircraft in flight, environment variables characterising the environment of the aircraft and trajectory variables characterising a reference trajectory of the aircraft;

**characterised in that** the device further comprises means for:

- calculating a predicted real trajectory of the aircraft from said state variables, environment variables and reference trajectory variables, by calculating prediction variables characterising the prediction of a real roll and/or of a real position of the aircraft for an upcoming change of direction of the aircraft;
- determining whether the calculated predicted real trajectory conforms to the reference trajectory; and
- configuring a trajectory deviation alert if the predicted real trajectory does not conform to the reference trajectory, the alert being configured to inform of the roll and/or of the lateral deviation of the aircraft with respect to the reference trajectory, on the upcoming change of direction.

7. The device according to claim 6, further comprising means configured to operate the steps of the method according to any one of claims 2 to 5.

8. A flight management system (FMS) comprising a device for assisting aircraft guidance according to claim 6 or claim 7.

9. A computer program product, said computer program comprising code instructions for performing the steps of the method for assisting aircraft guidance according to any one of claims 1 to 5, when said program is run on a computer.

$$Rayon = \frac{V^2}{g.\tan{(Roulis)}}$$

WPT A

Vitesse prédite V

WPT B

# FIG.1

## 200

Début

Acquisition variables d'état; variables d'environnement; variables de trajectoire de référence — 202

Calcul de trajectoire réelle prédite pour prochain changement de direction — 204

Détermination de conformité de la trajectoire réelle prédite — 206

Configuration d'alerte de déviation de trajectoire — 208

Fin

# FIG.2

FIG.3a

FIG.3b

FIG.4a

Trajectoire
prédite

xtk

Trajectoire
prédéfinie

Couloir

FIG.4b

502

504       L'aéronef est avant le virage      L'aéronef vole le virage       506

$P_0$ = Début de virage
$TAS_0$ = Vitesse au début du virage
$\Phi_0$ = Atan $(TAS_0^2 / g.R)$

$P_i$ = Position de l'aéronef
$TAS_i$ = Vitesse de l'aéronef
$\Phi_i$ = Roulis de l'aéronef

508

**Fonction de simulation**
Calcul de $(P_{n+1}, \Phi_{n+1})$

510      Condition de fin non atteinte

512

**Calcul de l'alerte**
Tracé, Message, ...

FIG.5

EP 4 185 933 B1

Vitesse

Distance

$X_0$
Début de virage

$X_{fin}$
Fin de virage

FIG.6

N

$Vent_{crs}$

$Vent_{mag}$

$X_{fin}$

$crs_n$

$X_n$

$X_0$

FIG.7

$P_{n+1}$ ; $\Phi_{n+1}$

$P_n$ ; $\Phi_n$

Rayon

$P_0$ ; $\Phi_0$

## FIG.8

$P_{n+1}$ ; $\Phi_{n+1}$

$crs_n$

$crs_{n+1}$

$P_n$ ; $\Phi_n$

Rayon

## FIG.9

FIG.10